# EUROPÄISCHE PATENTSCHRIFT

(11) **EP 2 731 839 B1**
(45) Veröffentlichungstag und Bekanntmachung des Hinweises auf die Patenterteilung: **30.03.2016**
(21) Anmeldenummer: 12734941.3
(22) Anmeldetag: 11.07.2012
(51) Int. Cl.: B60T 17/02, F15B 21/00

(54) **DRUCKLUFTAUFBEREITUNGSANLAGE UND VERFAHREN ZUM BETREIBEN EINER DRUCKLUFTAUFBEREITUNGSANLAGE**
COMPRESSED AIR PROCESSING SYSTEM AND METHOD FOR OPERATING A COMPRESSED AIR PROCESSING SYSTEM
INSTALLATION DE PRÉPARATION D'AIR COMPRIMÉ ET PROCÉDÉ SERVANT À FAIRE FONCTIONNER UNE INSTALLATION DE PRÉPARATION D'AIR COMPRIMÉ

(30) Priorität: 14.07.2011 DE 102011107155
(43) Veröffentlichungstag der Anmeldung: 21.05.2014
(73) Patentinhaber: KNORR-BREMSE Systeme für Nutzfahrzeuge GmbH, 80809 München (DE)
(72) Erfinder: ERTL, Thomas, 80935 München (DE)
(86) Internationale Anmeldenummer: PCT/EP2012/063557
(87) Internationale Veröffentlichungsnummer: WO 2013/007743

(56) Entgegenhaltungen:
- DE-A1- 10 323 037
- DE-A1-102007 013 673
- US-A1- 2007 246 998

## Beschreibung

Die vorliegende Erfindung betrifft eine Druckluftaufbereitungsanlage für ein Fahrzeug, insbesondere ein Nutzfahrzeug.

Die vorliegende Erfindung betrifft weiterhin ein Verfahren zum Betreiben einer Druckluftaufbereitungsanlage für ein Fahrzeug, insbesondere ein Nutzfahrzeug.

Eine derartige Anlage und ein entsprechende Betriebsverfahren sind aus der DE 103 23 037 A1 bekannt.

Moderne Nutzfahrzeuge verfügen über viele Teilsysteme, die mithilfe von Druckluft betrieben werden. Beispielsweise können bei einem Nutzfahrzeug eine Bremsanlage, ein Getriebe und eine Luftfederung mithilfe von Druckluft betrieben werden. Die hierfür notwendige Druckluft kann mithilfe eines in dem Fahrzeug integrierten Kompressors erzeugt werden, wobei die von dem Kompressor erzeugte Druckluft in einer Druckluftaufbereitungsanlage von Schmutz und Feuchtigkeit gereinigt werden kann, um einen erhöhten Verschleiß der mit der bereitgestellten Druckluft betriebenen Komponenten zu vermeiden. Die hierfür vorgesehenen Druckluftaufbereitungsanlagen sind häufig elektronisch durch ein zugehöriges Steuergerät steuerbar. Eine derartige elektronische Druckluftaufbereitungsanlage kann aufgrund der durch das elektronische Steuergerät ausgeführten und überwachten Steuerungen oder Regelungen des Betriebs sehr effizient arbeiten. Im Defektfall, insbesondere bei Ausfall des elektronischen Steuergerätes, muss das Nutzfahrzeug jedoch stillgelegt werden, weil wesentliche Funktionen der Druckluftaufbereitungsanlage nicht oder nicht mehr zuverlässig ausgeführt werden können.

Der vorliegenden Erfindung liegt die Aufgabe zugrunde, eine Druckluftaufbereitungsanlage bereitzustellen, die auch im Defektfall wesentliche Grundfunktionen der Druckluftaufbereitungsanlage sicherstellt.

Diese Aufgabe wird durch die Merkmale der unabhängigen Ansprüche gelöst.

Vorteilhafte Ausgestaltungen und Weiterbildungen der Erfindung sind in den abhängigen Ansprüchen angegeben.

Die Erfindung besteht aus einer Druckluftaufbereitungsanlage für ein Fahrzeug, insbesondere ein Nutzfahrzeug, umfassend einen Kompressorsteuerausgang, eine von einem elektronischen Steuergerät der Druckluftaufbereitungsanlage ansteuerbare Magnetventileinrichtung, und eine pneumatisch ansteuerbare Ventileinrichtung, wobei der Kompressorsteuerausgang über die pneumatisch ansteuerbare Ventileinrichtung mit einem Steuerdruck beaufschlagbar ist, und wobei die pneumatisch ansteuerbare Ventileinrichtung über die Magnetventileinrichtung und aus einem zentralen Druckluftbereich ansteuerbar ist. Unter dem Begriff "ansteuerbar" ist unter anderem das Betätigen der Magnetventileinrichtung zu verstehen, das heißt das Überführen von einem ersten Schaltzustand in einen zweiten Schaltzustand, Die Druckluftaufbereitungsanlage kann im Normalbetrieb, das heißt ohne Defekt, den Kompressorsteuerausgang durch Betätigen der Magnetventileinrichtung mit einem Steuerdruck beaufschlagen, um einen über den Kompressorsteuerausgang ansteuerbaren Kompressor zu entlasten oder abzuschalten. Auf diese Weise kann im Normalbetrieb die Förderung von Druckluft durch den Kompressor zu der Druckluftaufbereitungsanlage beeinflusst werden. Im Defektfall, das heißt bei einem Ausfall des elektronischen Steuergerätes, ist das Betätigen der Magnetventileinrichtung zur Beaufschlagung des Kompressorsteuerausgangs mit einem Steuerdruck nicht möglich. Der Kompressorsteuerausgang kann jedoch über die pneumatisch ansteuerbare Ventileinrichtung mit einem Steuerdruck beaufschlagt werden. Das zum Betätigen der pneumatisch ansteuerbaren Ventileinrichtung notwendige Drucksignal kann aus dem zentralen Druckluftbereich der Druckluftaufbereitungsanlage der Ventileinrichtung über eine einfache pneumatische Steuerleitung direkt zugeführt werden. Als zentraler Druckluftbereich kann beispielsweise ein Bereich der Druckluftaufbereitungsanlage aufgefasst werden, in dem permanent aufbereitete Druckluft mit dem vorhandenen Versorgungsdruck ansteht.

Darüber hinaus kann vorgesehen sein, dass der Kompressorsteuerausgang zusätzlich über die Magnetventileinrichtung beaufschlagbar ist. Die zusätzliche Ansteuerung des Kompressorsteuerausgangs ermöglicht einen schnelleren Druckaufbau an dem Kompressorsteuerausgang und verkürzt somit die Schaltzeiten bei der Ansteuerung des Kompressors.

Nützlicherweise kann vorgesehen sein, dass ein Rückschlagventil zwischen der Magnetventileinrichtung und dem Kompressorsteuerausgang angeordnet ist, so dass ein Rückströmen von Druckluft von dem Kompressorsteuerausgang zu der Magnetventileinrichtung verhindert ist. Auf diese Weise kann im Defektfall ein unerwünschter Druckverlust am Kompressorsteuerausgang durch miteinander kommunizierende Kompressorsteuerleitungen verhindert werden. Das Rückschlagventil sperrt im Defektfall einen nicht funktionsfähigen Bereich der Druckluftaufbereitungsanlage gegenüber einem funktionsfähigen Bereich, aus dem der Kompressorsteuerausgang mit Druckluft beaufschlagt wird. Dadurch kann das Leitungsvolumen reduziert werden, so dass der Druckluftverbrauch und die für den Druckaufbau am Kompressorsteuerausgang notwendige Zeit verringert werden.

Weiterhin kann vorgesehen sein, dass der Kompressorsteuerausgang über die pneumatisch ansteuerbare Ventileinrichtung entlüftbar ist. Das Entlüften des Kompressorsteuerausgangs über die pneumatisch ansteuerbare Ventileinrichtung ermöglicht eine schnelle Entlüftung des Kompressorsteuerausgangs durch Realisierung einer pneumatischen Vorsteuerung. Die pneumatische Vorsteuerung der Ventileinrichtung erlaubt die Verwendung eines größeren Ventilquerschnitts bei der Ventileinrichtung, so dass der Druckluftdurchsatz erhöht ist.

Es kann vorgesehen sein, dass die Druckluftaufbereitungsanlage eine von dem elektronischen Steuergerät ansteuerbare weitere Magnetventileinrichtung und eine pneumatisch ansteuerbare weitere Ventileinrichtung umfasst, dass die weitere Magnetventileinrichtung in einer Regenerationsluftleitung zur Regeneration einer Lufttrocknerpatrone der Druckluftaufbereitungsanlage angeordnet ist, dass die pneumatisch ansteuerbare weitere Ventileinrichtung in einer weiteren Regenerationsluftleitung angeordnet ist, und dass die pneumatisch ansteuerbare weitere Ventileinrichtung pneumatisch von der Magnetventileinrichtung ansteuerbar ist. Auf diese Weise kann im Normalbetrieb eine Regeneration der Lufttrocknerpatrone elektronisch gesteuert realisiert werden. Gleichzeitig kann im Defektfall eine Regeneration der Lufttrocknerpatrone basierend auf dem in dem zentralen Druckluftbereich anstehenden Versorgungsdruck realisiert werden. Die beschriebene Druckluftaufbereitungsanlage kann daher auch im Defektfall bis zum Erreichen einer Werkstatt weiterbetrieben werden, ohne dass erhöhte Verschleißerscheinungen aufgrund einer ausgefallenen Regenerationsphase der Lufttrocknerpatrone zu befürchten sind.

Die beschriebene Druckluftaufbereitungsanlage kann dadurch weitergebildet werden, dass ein pneumatisch aus einer Druckluftförderleitung ansteuerbares Sicherheitsventil vorgesehen ist, das weiterhin auch aus der Regenerationsluftleitung und/oder der weiteren Regenerationsluftleitung pneumatisch ansteuerbar ist. Das Sicherheitsventil ist pneumatisch ansteuerbar und kann während einer Regenerationsphase ein Ausströmen der zur Regeneration verwendeten Druckluft sowohl im Normalbetrieb als auch im Defektfall erlauben. Weiterhin kann das Sicherheitsventil einen unzulässig hohen Druckanstieg in der Druckluftaufbereitungsanlage durch das Öffnen bei einem vorbestimmbaren Öffnungsdruck verhindern.

Vorteilhafterweise kann vorgesehen sein, dass in der Regenerationsluftleitung ein Regenerationsleitungsrückschlagventil und/oder eine Drossel angeordnet sind, wobei das Regenerationsleitungsrückschlagventil derart angeordnet ist, dass Regenerationsluft zu der Lufttrocknerpatrone strömen kann. Auf diese Weise kann ein unbeabsichtigter Druckverlust durch die Regenerationsluftleitung außerhalb einer Regenerationsphase vermieden werden. Zugleich kann die Regenerationsgeschwindigkeit, das heißt das pro Zeiteinheit während einer Regenerationsphase durch die Lufttrocknerpatrone rückströmende Luftvolumen, durch die Drossel begrenzt werden.

Die Erfindung besteht weiterhin aus einem Verfahren zum Betreiben einer Druckluftaufbereitungsanlage für ein Fahrzeug, insbesondere ein Nutzfahrzeug, umfassend einen Kompressorsteuerausgang, eine von einem elektronischen Steuergerät der Druckluftaufbereitungsanlage ansteuerbare Magnetventileinrichtung und eine pneumatisch ansteuerbare Ventileinrichtung, wobei der Kompressorsteuerausgang über die pneumatisch ansteuerbare Ventileinrichtung mit einem Steuerdruck beaufschlagt wird, und wobei die pneumatisch ansteuerbare Ventileinrichtung über die Magnetventileinrichtung und aus einem zentralen Druckluftbereich angesteuert wird. Insbesondere kann das Verfahren jegliche Druckluftaufbereitungsanlagen, wie vorstehend beschrieben, verwenden.

Auf diese Weise können die Vorteile und Besonderheiten der beschriebenen Vorrichtung auch im Rahmen eines Verfahrens umgesetzt werden.

Das beschriebene Verfahren kann in einfacher Weise dadurch weitergebildet werden, dass der Kompressorsteuerausgang zusätzlich über die Magnetventileinrichtung mit einem Steuerdruck beaufschlagt wird. Dies erlaubt kürzere Schaltzeiten des Kompressors, da der Druckaufbau an dem Kompressorsteuerausgang schneller erfolgen kann.

Die Vorteile und Besonderheiten der im Zusammenhang mit den abhängigen Ansprüchen beschriebenen Druckluftaufbereitungsanlage können in gleicherweise im Rahmen des beschriebenen Verfahrens umgesetzt werden.

Die Vorrichtung und das Verfahren werden im Folgenden anhand beispielhafter Ausführungsformen beschrieben.

Es zeigen:
- Figur 1: eine schematische Darstellung einer ersten Ausführungsform einer Druckluftaufbereitungsanlage;
- Figur 2: eine schematische Darstellung einer zweiten Ausführungsform einer Druckluftaufbereitungsanlage;
- Figur 3: eine schematische Darstellung einer dritten Ausführungsform einer Druckluftaufbereitungsanlage;
- Figur 4: eine schematische Darstellung einer vierten Ausführungsform einer Druckluftaufbereitungsanlage;
- Figur 5: eine schematische Darstellung einer fünften Ausführungsform einer Druckluftaufbereitungsanlage;
- Figur 6: eine schematische Darstellung einer pneumatisch ansteuerbaren Ventileinrichtung in Form eines 3/2-Wegeventils;
- Figur 7: ein Schnittbild einer Ausführungsform einer pneumatisch ansteuerbaren Ventileinrichtung in Form eines 3/2-Wegeventils; und
- Figur 8: ein Schnittbild einer weiteren Ausführungsform einer pneumatisch ansteuerbaren Ventileinrichtung in Form eines 3/2-Wegeventils.

Im Folgenden bezeichnen gleiche Bezugszeichen gleiche oder gleichartige Teile.

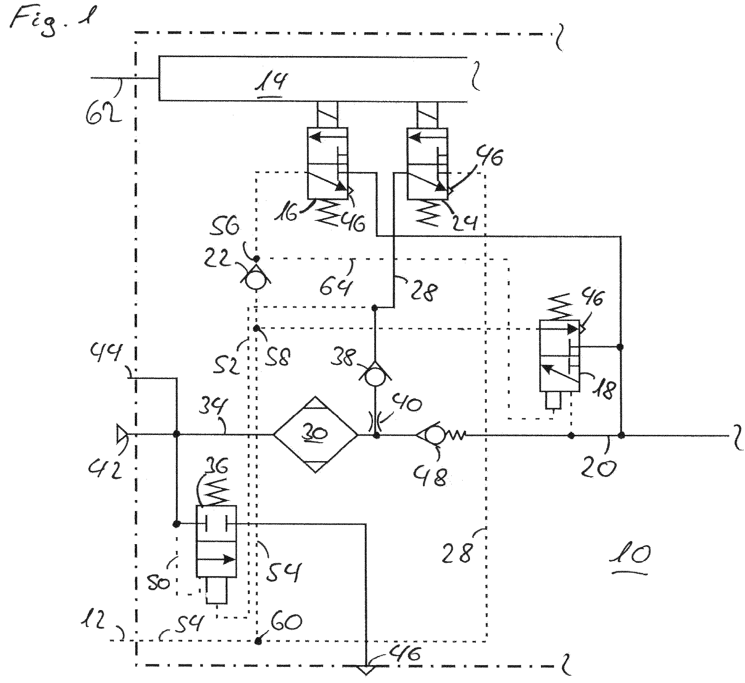

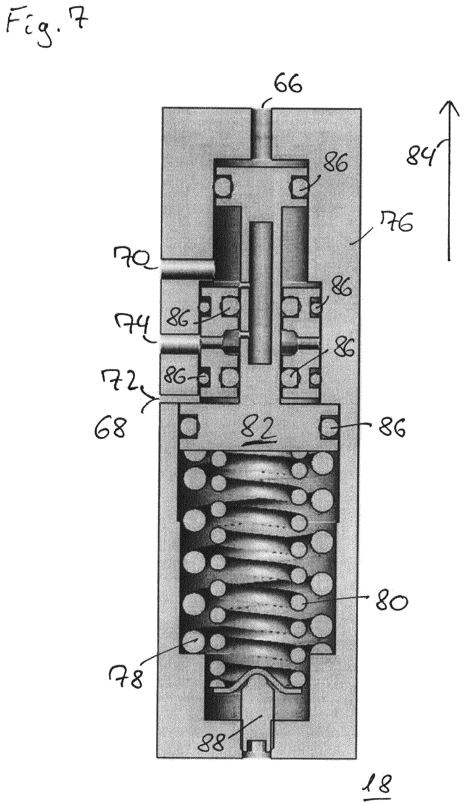

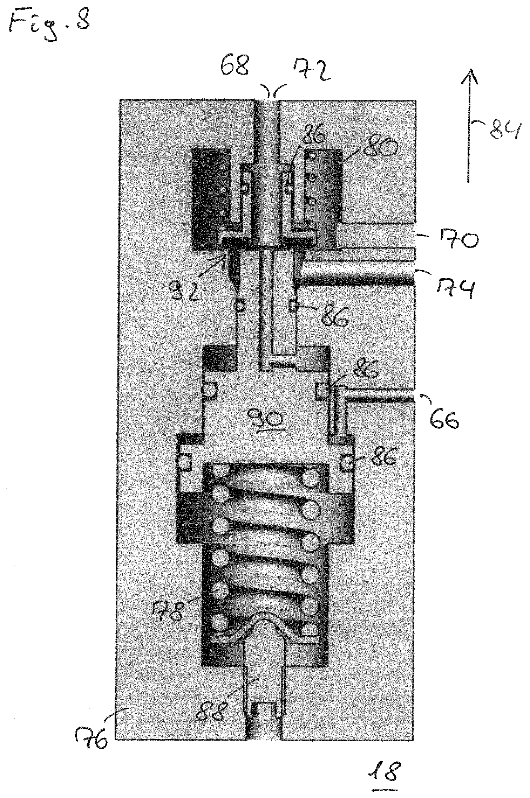

Figur 1 zeigt eine schematische Darstellung einer ersten Ausführungsform einer Druckluftaufbereitungsanlage. Die dargestellte Druckluftaufbereitungsanlage 10 umfasst einen Drucklufteingang 42 und einen weiteren Drucklufteingang 44, über die insbesondere nicht aufbereitete Druckluft der Druckluftaufbereitungsanlage 10 zuführbar ist. Der Drucklufteingang 42 kann zu diesem Zweck mit einem nicht dargestellten Kompressor verbunden sein, der Umgebungsluft ansaugt und verdichtet. Der weitere Drucklufteingang 44 kann beispielsweise zur wahlweisen Zuführung von Druckluft aus anderen nicht dargestellten Druckluftquellen genutzt werden. Die über die beiden Drucklufteingänge 42, 44 zugeführte Druckluft kann über eine Druckluftförderleitung 34 einer Lufttrocknerpatrone 30 zugeführt werden. Die Lufttrocknerpatrone 30 kann eine Filtereinrichtung umfassen, die Öl und Schmutzpartikel von der zugeführten Druckluft separiert, beispielsweise in Form eines Koaleszenzfilters. Weiterhin kann die Lufttrocknerpatrone 30 ein Trockenmittel umfassen, das der zugeführten Druckluft Feuchtigkeit entzieht. Nach dem Durchströmen der Lufttrocknerpatrone 30 ist die zugeführte Druckluft aufbereitet, das heißt sie ist gereinigt und getrocknet. Die aufbereitete Druckluft kann über ein weiteres Rückschlagventil 48 einem zentralen Druckluftbereich 20 zugeführt werden. Das weitere Rückschlagventil 48 verhindert ein direktes Rückströmen von aufbereiteter Druckluft aus dem zentralen Druckluftbereich 20 zu der Lufttrocknerpatrone 30. Der zentrale Druckluftbereich 20 der Druckluftaufbereitungsanlage 10 kann beispielsweise dadurch charakterisiert sein, dass dort ständig ein von der Druckluftaufbereitungsanlage 10 bereitstellbarer Versorgungsdruck herrscht. Der zentrale Druckluftbereich 20 kann sich daher ausgehend von dem weiteren Rückschlagventil 48 bis hin zu angrenzenden dargestellten oder nicht dargestellten Ventileinrichtungen erstrecken, hinter denen der Versorgungsdruck abgebaut werden kann, beispielsweise durch eine Entlüftung. Der zentrale Druckluftbereich 20 kann daher ausgehend von dem weiteren Rückschlagventil 48 zumindest sämtliche Druckluftleitungen bis zu den nächsten dargestellten beziehungsweise nicht dargestellten Ventileinrichtungen umfassen. Wenn der Druck in dem zentralen Druckluftbereich 20 auf einen einstellbaren Maximalwert angestiegen ist, kann die Zufuhr von Druckluft über den Drucklufteingang 42 durch das Beaufschlagen eines Kompressorsteuerausgangs 12 mit Druckluft beeinflusst werden, beispielsweise beendet. Zu diesem Zweck ist eine mit dem zentralen Druckluftbereich 20 verbundene Magnetventileinrichtung 16 vorgesehen, die von einem elektronischen Steuergerät 14 ansteuerbar sein kann. Die Magnetventileinrichtung 16 kann beispielsweise als 3/2-Wegeventil ausgebildet sein. Die Magnetventileinrichtung 16 kann über eine Kompressorsteuerleitung 54 mit dem Kompressorsteuerausgang 12 verbunden sein. Die Kompressorsteuerleitung 54 kann eine erste Abzweigung 56, eine zweite Abzweigung 58 und eine dritte Abzweigung 60 aufweisen. Zwischen der ersten Abzweigung 56 und der zweiten Abzweigung 58 kann ein Rückschlagventil 22 derart angeordnet sein, dass es ein Rückströmen von Druckluft von der zweiten Abzweigung 58 zu der ersten Abzweigung 56 verhindert. Wenn die Magnetventileinrichtung 16 von dem elektronischen Steuergerät 14 in seine nicht dargestellte Schaltposition überführt ist, ist der Kompressorsteuerausgang 12 mit dem zentralen Druckluftbereich 20 gekoppelt, so dass an dem Kompressorsteuerausgang 12 ein pneumatisches Steuersignal ansteht, mit dessen Hilfe der nicht dargestellte Kompressor angesteuert werden kann, beispielsweise abgeschaltet oder entlastet. Die Magnetventileinrichtung 16 kann in dargestellter Weise eine stabile Ruhestellung haben, in der die Kompressorsteuerleitung 54 zumindest teilweise über eine Entlüftung 46 entlüftet wird. Die Druckluftaufbereitungsanlage 10 kann weiterhin eine pneumatisch ansteuerbare Ventileinrichtung 18 umfassen. Die Ventileinrichtung 18 kann beispielsweise als 3/2-Wegeventil ausgeführt sein. Ein Eingangsanschluss der Ventileinrichtung 18 kann mit dem zentralen Druckluftbereich 20 gekoppelt sein. Ein Ausgangsanschluss der Ventileinrichtung 18 kann mit der zweiten Abzweigung 58 gekoppelt sein, so dass in der nicht dargestellten Schaltposition der Ventileinrichtung 18 der zentrale Druckluftbereich über die zweite Abzweigung 58 mit dem Kompressorsteuerausgang 12 gekoppelt ist. Der Kompressorsteuerausgang 12 kann auf diese Weise sowohl über die Magnetventileinrichtung 16 als auch unabhängig davon über die Ventileinrichtung 18 mit einem pneumatischen Steuersignal beaufschlagt werden. Die Ventileinrichtung 18 kann über eine Entlüftung 46 verfügen, über die die Kompressorsteuerleitung 54 in der dargestellten Schaltstellung der Ventileinrichtung 18 zumindest teilweise entlüftet werden kann. Die Ventileinrichtung 18 kann über zwei voneinander unabhängige pneumatische Steuereingänge verfügen. Ein erster pneumatischer Steuereingang der Ventileinrichtung 18 kann über die erste Abzweigung 56 durch eine pneumatische Steuerleitung 64 mit der Kompressorsteuerleitung 54 gekoppelt sein. Das Betätigen der Magnetventileinrichtung 16 durch das elektronische Steuergerät 14 kann daher gleichzeitig zu einem Betätigen der Ventileinrichtung 18 über die an der ersten Abzweigung 56 der Kompressorsteuerleitung 54 abzweigende pneumatische Steuerleitung 64 führen. Da das pneumatische Steuersignal an dem Kompressorsteuerausgang 12 somit sowohl über die Magnetventileinrichtung 16 als auch über die von der Magnetventileinrichtung 16 vorgesteuerte pneumatisch ansteuerbare Ventileinrichtung 18 aufgebaut werden kann, kann das für die Steuerung des an dem Kompressorsteuerausgang 12 angeschlossenen Kompressors notwendige pneumatische Steuersignal besonders schnell aufgebaut werden. Bei jedem Schaltvorgang der Magnetventileinrichtung 16 kann die Ventileinrichtung 18 mit betätigt werden, wodurch beispielsweise ein Festhaften von Dichtungen 86 an einem Gehäuse 76 bei einem längeren Stillstand, das heißt bei längerem nicht Betätigen der Ventileinrichtung 18, vermieden werden kann. Das Gehäuse 76 und die Dichtungen 86 werden im Zusammenhang mit den Figuren 7 und 8 später beschrieben. Der zum Schalten der Ventileinrichtung 18 notwendige Schaltdruck bleibt daher unverändert und es wird im Defektfall des Steuergerätes 14 beim ersten Schaltvorgang der Ventileinrichtung 18 kein höherer Schaltdruck zum Losreißen der Dichtungen 86 benötigt. Auf diese Weise steht bei einem Ausfall des elektrischen Steuergerätes 14 die Ventileinrichtung 18 sofort mit ihrem üblichen Schaltdruck betriebsbereit zur Verfügung. Die Ventileinrichtung 18 verfügt weiterhin über einen zweiten pneumatischen Steuereingang, der direkt aus dem zentralen Druckluftbereich 20 mit Druck beaufschlagt ist. Die beiden pneumatischen Betätigungsdrücke der Ventileinrichtung 18 können unterschiedlich groß gewählt werden. Zum Betätigen der Ventileinrichtung 18 über die Magnetventileinrichtung 16 kann ein Steuerdruck ausreichend sein, der geringer ist, als der zum Betätigen der Ventileinrichtung 18 notwendige Steuerdruck aus dem zentralen Druckluftbereich 20 über den zweiten pneumatischen Steuereingang. Auf diese Weise kann im Normalbetrieb ein vorrangiges Betätigen der Ventileinrichtung 18 über die Magnetventileinrichtung 16 realisiert werden.

Eine Regeneration der Lufttrocknerpatrone 30 ist über eine Regenerationsluftleitung 28 möglich, die ein Rückströmen von aufbereiteter Druckluft aus dem zentralen Druckluftbereich 20 unter Umgehung des weiteren Rückschlagventils 48 ermöglicht. Die Regenerationsluftleitung 28 kann an der dritten Abzweigung 60 der Kompressorsteuerleitung 54 entspringen und zwischen der Lufttrocknerpatrone 30 und dem weiteren Rückschlagventil 48 münden. Um eine separate Regelung der Regeneration unabhängig von einem Betätigen des Kompressors über die Magnetventileinrichtung 16 zu realisieren, kann in der Regenerationsluftleitung 28 eine weitere Magnetventileinrichtung 24 angeordnet sein, die durch das elektronische Steuergerät 14 betätigt werden kann. Die weitere Magnetventileinrichtung 24 kann beispielsweise als 3/2-Wegeventil mit einem Entlüftungsanschluss 46 ausgeführt sein. In der Regenerationsluftleitung 28 kann weiterhin ein Regenerationsleitungsrückschlagventil 38, angeordnet sein, welches eine Umkehrung der Strömungsrichtung entgegengesetzt der üblichen Regenerationsluftströmung verhindert. Weiterhin kann in der Regenerationsluftleitung 28 eine Drossel 40 angeordnet sein, die die pro Zeiteinheit zur Regeneration entweichende Regenerationsluftmenge beschränken kann. Um das Entweichen der zur Regeneration vorgesehenen Regenerationsluft aus der Druckluftaufbereitungsanlage 10 zu ermöglichen, kann ein Sicherheitsventil 36 vorgesehen sein, das mit der Druckluftförderleitung 34 und der Entlüftung 46 gekoppelt ist. Das Sicherheitsventil 36 kann beispielsweise als pneumatisch schaltbares 2/2-Wegeventil ausgeführt sein. Eine erste Sicherheitsventilsteuerleitung 50 kann ausgehend von der Druckluftförderleitung 34 zum pneumatischen Betätigen des Sicherheitsventils 36 vorgesehen sein. Auf diese Weise kann bei einem unzulässig hohen Druckanstieg in der Druckluftförderleitung 34 das Sicherheitsventil 36 in seine nicht dargestellte Schaltposition überführt werden, so dass ein Druckabbau aus der Druckluftförderleitung 34 über die Entlüftung 46 stattfinden kann. Das Sicherheitsventil 36 kann als Druckbegrenzer wirken. Ausgehend von der Regenerationsluftleitung 28 ist eine zweite Sicherheitsventilsteuerleitung 52 vorgesehen, die ebenfalls das Sicherheitsventil 36 pneumatisch ansteuert.

Die Einleitung einer Regeneration der Lufttrocknerpatrone 30 erfordert zunächst das Abschalten oder das Entlasten des an dem Kompressorsteuerausgang 12 angeschlossenen Kompressors durch Betätigung der Magnetventileinrichtung 16 über das elektronische Steuergerät 14. Weiterhin kann die weitere Magnetventileinrichtung 24 ebenfalls durch das elektronische Steuergerät 14 angesteuert werden. Durch die Ansteuerung der weiteren Magnetventileinrichtung 24 wird ein pneumatisches Drucksteuersignal in der zweiten Sicherheitsventilsteuerleitung 52 erzeugt, so dass die in der Regenerationsluftleitung 28 vorhandene Druckluft unter Umkehrung der während einer Druckluftförderphase herrschenden Verhältnisse durch die Lufttrocknerpatrone 30 in die Druckluftförderleitung 34 rückströmen kann und über das Sicherheitsventil 36 und die Entlüftung 46 die Druckluftaufbereitungsanlage 10 verlässt. Während der Rückströmung durch die Lufttrocknerpatrone 30 kann die Regenerationsluft zurückgehaltene Öl- und Schmutzpartikel sowie in dem Trockenmittel gespeicherte Feuchtigkeit aufnehmen und aus der Druckluftaufbereitungsanlage 10 austragen. Das elektronische Steuergerät 14 kann über einen Anschluss 62 an einen CAN-Bus verfügen, über den der Druckluftaufbereitungsanlage 10 zusätzliche spezifische Informationen betreffend den Fahrzeugzustand zugeführt werden können, die im Zusammenhang mit dem Betrieb der Druckluftaufbereitungsanlage 10 relevant sein können. Die Druckluftaufbereitungsanlage 10 kann weiterhin je nach Bedarf nicht dargestellte Drucksensoren aufweisen, um beispielsweise interne Betriebszustände der Druckluftaufbereitungsanlage 10 zu überwachen und basierend auf den erfassten Druckwerten die Druckluftaufbereitungsanlage 10 zu steuern/regeln. Die dargestellte Druckluftaufbereitungsanlage 10 kann weitere dem Fachmann bekannte Komponenten umfassen, die in der vorliegenden Darstellung nicht explizit dargestellt sind. Figur 1 zeigt lediglich einen Ausschnitt einer Druckluftaufbereitungsanlage 10. Dies ist in Figur 1 durch die Verwendung S-förmiger Symbole in der rechten Figurenhälfte angedeutet. Die S-förmigen Symbole deuten beispielsweise eine Fortsetzung des zentralen Druckluftbereichs 20 an. Weiterhin deutet ein S-förmiges Symbol an, dass das elektronische Steuergerät 14 nur teilweise dargestellt ist. Darüber hinaus deuten S-förmige Symbole an, dass die Druckluftaufbereitungsanlage 10 nur teilweise dargestellt ist, da der die Druckluftaufbereitungsanlage 10 eingrenzende Rahmen, das heißt die gestrichpunktete Linie, nach rechts offen ist. Beispielsweise kann die Druckluftaufbereitungsanlage 10 einen nicht dargestellten Anschluss für ein Mehrkreisschutzventil beziehungsweise ein vollständiges Mehrkreisschutzventil umfassen. Die voneinander getrennt dargestellten Entlüftungen 46 des Sicherheitsventils 36, der Magnetventileinrichtung 16, der weiteren Magnetventileinrichtung 24 sowie der Ventileinrichtung 18 können bei Bedarf zumindest teilweise zu einer gemeinsamen Entlüftung 46 zusammengefasst und aus der Druckluftaufbereitungsanlage 10 hinausgeführt sein.

Im Defektfall, das heißt bei einem Ausfall des elektronischen Steuergerätes 14, können die Magnetventileinrichtung 16 und die weitere Magnetventileinrichtung 24 nicht in die nicht dargestellte Schaltposition überführt werden. Es ist daher nicht möglich, durch das Betätigen der Magnetventileinrichtung 16 die Kompressorsteuerleitung 54 zu belüften, um ein pneumatisches Steuersignal am Kompressorsteuerausgang 12 bereitzustellen. Dementsprechend wird ein Druckluft an dem Drucklufteingang 42 bereitstellender Kompressor den Systemdruck in der Druckluftaufbereitungsanlage 10 durch Förderung weiterer Druckluft ansteigen lassen. Bei Überschreiten eines einstellbaren Druckniveaus in dem zentralen Druckluftbereich 20 wird die Ventileinrichtung 18 über den zweiten pneumatischen Steuereingang direkt über den zentralen Druckluftbereich 20 betätigt. Aufgrund dieser Betätigung wird die Kompressorsteuerleitung 54 ab dem Rückschlagventil 22 mit Druckluft beaufschlagt. Daher steht am Kompressorsteuerausgang 12 ein pneumatisches Drucksignal an, das die weitere Druckluftförderung durch einen angeschlossenen Kompressor beeinflussen kann, beispielsweise beenden. Auf diese Weise kann der Verschleiß des Kompressors reduziert werden, da dieser im Defektfall nicht ständig weiterfördert. Das zum Betätigen der Ventileinrichtung 18 über den zentralen Druckluftbereich 20 notwendige Druckniveau kann beispielsweise oberhalb eines Druckniveaus liegen, welches zum pneumatischen Betätigen der Ventileinrichtung 18 über den ersten pneumatischen Steuereingang durch die Magnetventileinrichtung 16 notwendig ist. Gleichzeitig kann das Druckniveau jedoch auch geringer als ein Sicherheitsdruck der Druckluftaufbereitungsanlage 10 gewählt sein, ab dem das Sicherheitsventil 36 über die erste Ventilsteuerleitung 50 einen weiteren Druckanstieg in der Druckluftförderleitung 34 verhindert. Diese Einstellung erlaubt auch im Defektfall eine Einsparung von Energie, da Druckluft nicht ungenutzt über das Sicherheitsventil 36 aus der Druckluftaufbereitungsanlage abgelassen werden muss.

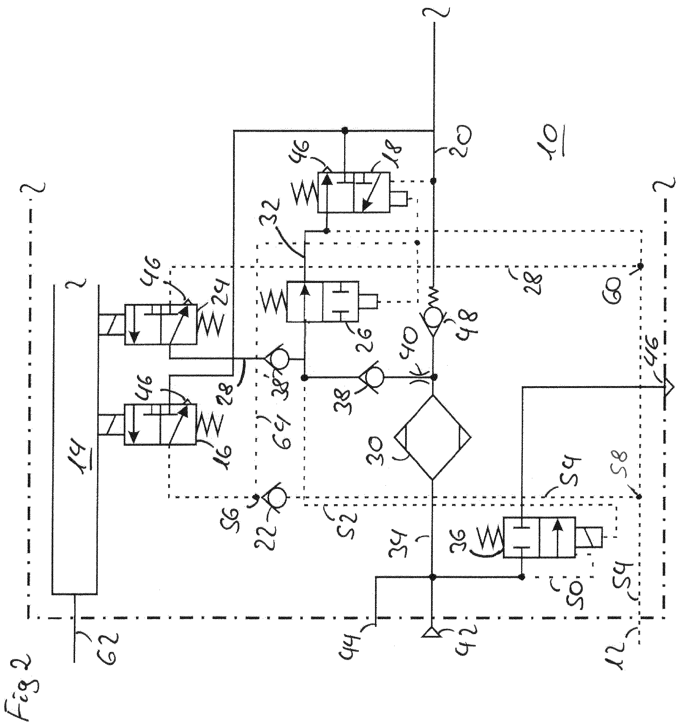

Figur 2 zeigt eine schematische Darstellung einer zweiten Ausführungsform einer Druckluftaufbereitungsanlage. Neben bereits aus der Figur 1 bekannten Komponenten ist in der Figur 2 eine pneumatisch ansteuerbare weitere Ventileinrichtung 26 dargestellt. Die weitere Ventileinrichtung 26 ist in einer weiteren Regenerationsluftleitung 32 angeordnet, die ausgehend von der pneumatisch ansteuerbaren Ventileinrichtung 18 zu der Regenerationsluftleitung 28 führt. Die weitere Ventileinrichtung 26 ist genau wie die Ventileinrichtung 18 über die pneumatische Steuerleitung 64 von der Magnetventileinrichtung 16 pneumatisch ansteuerbar. Die weitere Ventileinrichtung 26 kann beispielsweise als druckloses offenes 2/2-Wegeventil ausgeführt sein. Die in der Figur 2 dargestellte Ausführungsform erlaubt auch im Defektfall eine Regeneration der Lufttrocknerpatrone 30 bei einem Ausfall des elektronischen Steuergerätes 14, zusätzlich zu der aus Figur 1 bereits bekannten Steuerung des Kompressors.

Im Normalbetrieb wird während eines Regenerationszyklus die weitere Ventileinrichtung 26 in ihren nicht dargestellten Schaltzustand überführt. Im Übrigen erfolgt die Regeneration analog zu der aus Figur 1 bekannten ersten Ausführungsform.

Bei einem Ausfall des elektronischen Steuergerätes 14 wird mit Erreichen des Abschaltdruckes analog zu der aus Figur 1 bekannten ersten Ausführungsform die Ventileinrichtung 18 direkt aus dem zentralen Druckluftbereich 20 pneumatisch angesteuert. Da die Magnetventileinrichtung 16 die pneumatische Steuerleitung 64 über die Entlüftung 46 entlüftet, befindet sich die weitere Ventileinrichtung 26 in ihrer dargestellten offenen Schaltstellung. Aufgrund der vorgesehenen weiteren Regenerationsluftleitung 32 kann Regenerationsluft über das Regenerationsleitungsrückschlagventil 38 und die Drossel 40 unter Umgehung des weiteren Rückschlagventils 48 zu der Lufttrocknerpatrone 30 rückströmen. Um einen unerwünschten Druckverlust an der Entlüftung 46 der weiteren Magnetventilvorrichtung 24 zu verhindern, kann ein weiteres Regenerationsleitungsrückschlagventil 38' in der Regenerationsluftleitung 28 vorgesehen sein, so dass die weitere Regenerationsluftleitung zwischen dem Regenerationsleitungsrückschlagventil 38 und dem weiteren Regenerationsleitungsrückschlagventil 38' in der Regenerationsluftleitung 28 mündet.

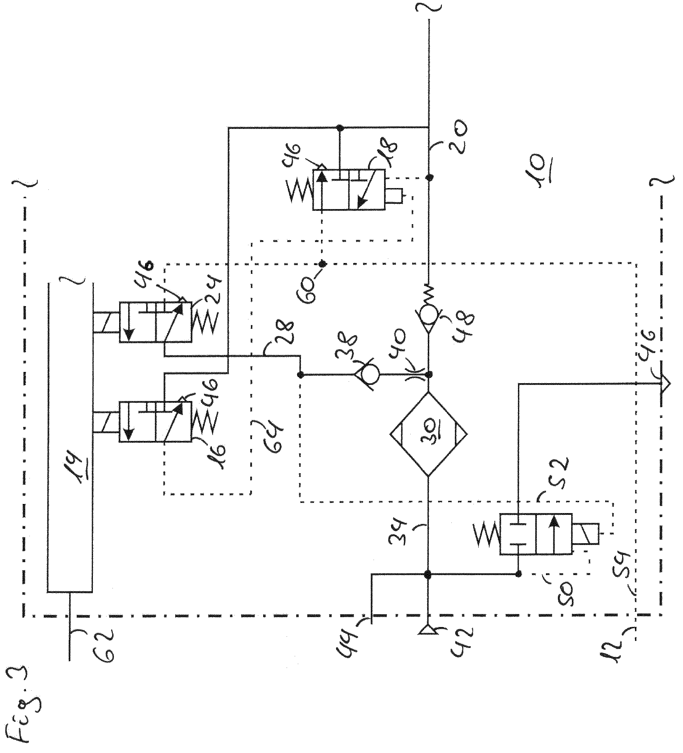

Figur 3 zeigt eine schematische Darstellung einer dritten Ausführungsform einer Druckluftaufbereitungsanlage. Die in Figur 3 dargestellte Druckluftaufbereitungsanlage 10 verzichtet auf das aus Figur 1 bekannte Rückschlagventil 22 in der Kompressorsteuerleitung 54. Um im Defektfall ein Entweichen von Druckluft über die Entlüftung 46 der Magnetventileinrichtung 16 zu verhindern, ist die pneumatische Steuerleitung 64 direkt mit dem ersten pneumatischen Steuereingang der Ventileinrichtung 18 gekoppelt. Weiterhin ist keine direkte Druckbeaufschlagung des Kompressorsteuerausgangs 12 durch die Magnetventileinrichtung 16 vorgesehen. Die Druckbeaufschlagung des Kompressorsteuerausgangs 12 über die Kompressorsteuerleitung 54 erfolgt nur über die Ventileinrichtung 18. Die Magnetventileinrichtung 16 steuert die Ventileinrichtung 18 vor. Die in Figur 3 dargestellte dritte Ausführungsform arbeitet analog zu der in Figur 1 dargestellten ersten Ausführungsform.

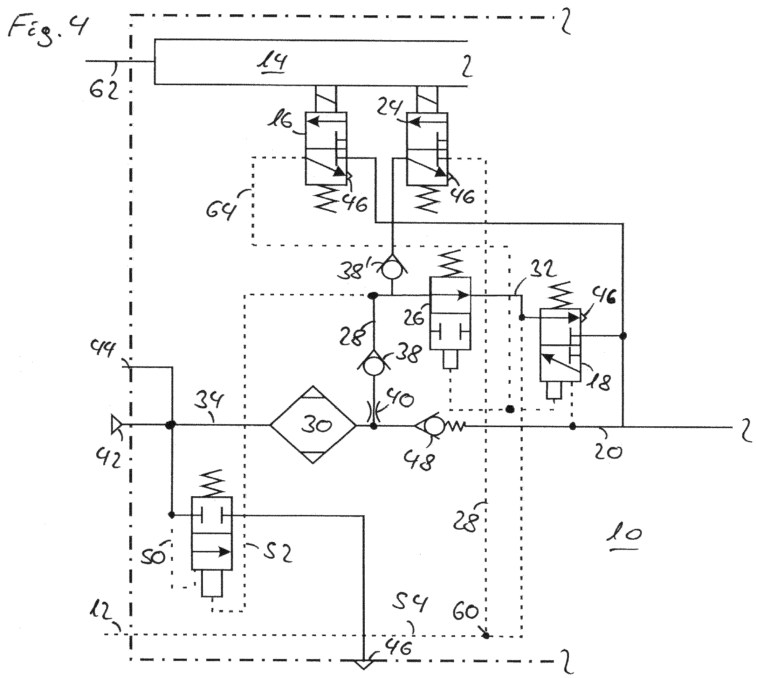

Figur 4 zeigt eine schematische Darstellung einer vierten Ausführungsform einer Druckluftaufbereitungsanlage. Die in Figur 4 dargestellte vierte Ausführungsform entspricht hinsichtlich ihrer Arbeitsweise der aus Figur 2 bereits bekannten zweiten Ausführungsform. Analog zu der aus Figur 3 bekannten dritten Ausführungsform kann eine direkte Druckbeaufschlagung des Kompressorsteuerausgangs 12 durch die Magnetventileinrichtung 16 entfallen, um auf das bei der zweiten Ausführungsform gemäß Figur 2 in der Kompressorsteuerleitung 54 angeordnete Rückschlagventil 22 verzichten zu können. Die Magnetventileinrichtung 16 steuert bei der vierten Ausführungsform die Ventileinrichtung 18 vor.

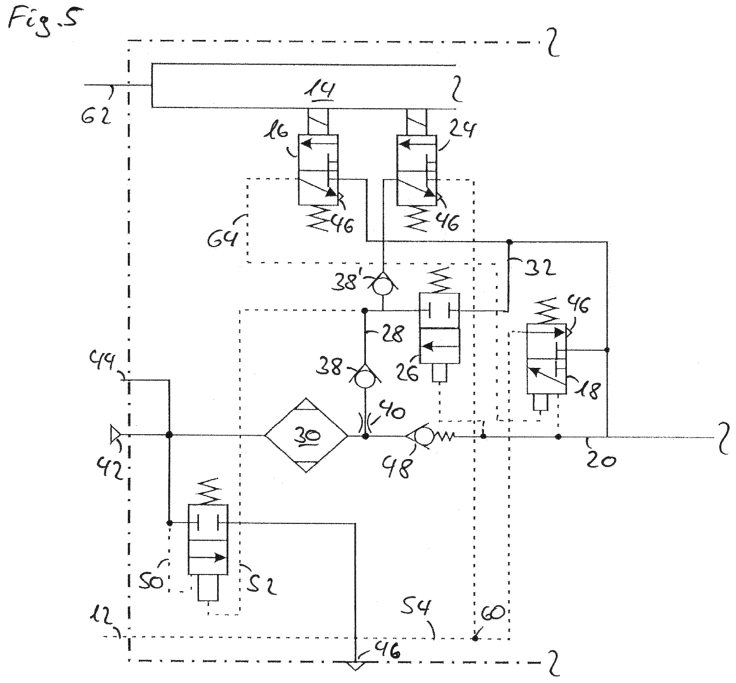

Figur 5 zeigt eine schematische Darstellung einer fünften Ausführungsform einer Druckluftaufbereitungsanlage. Die in Figur 5 dargestellte Ausführungsform baut auf der aus Figur 4 bekannten vierten Ausführungsform auf. Die weitere Regenerationsluftleitung 32 wird allerdings im Gegensatz zur vierten Ausführungsform nicht über die Ventileinrichtung 18 sondern direkt aus dem zentralen Druckluftbereich 20 gespeist. Weiterhin kann die weitere Ventileinrichtung 26 aus dem zentralen Druckluftbereich 20 direkt mit Druckluft angesteuert sein. Somit kann bei Überschreiten eines Abschaltdruckes die weitere Ventileinrichtung 26 in ihre nicht dargestellte Schaltposition überführt werden, um die weitere Regenerationsluftleitung 32 zu öffnen und auch im Defektfall eine Regeneration der Lufttrocknerpatrone 30 zu ermöglichen.

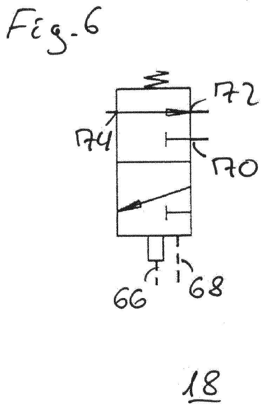

Figur 6 zeigt eine schematische Darstellung einer pneumatisch ansteuerbaren Ventileinrichtung in Form eines 3/2-Wegeventils. Das dargestellte 3/2-Wegeventil kann beispielsweise als Ventileinrichtung 18 in den bereits bekannten Ausführungsformen einer Druckluftaufbereitungsanlage verwendet werden. Die dargestellte Ventileinrichtung verfügt über einen ersten Druckluftsteuereingang 66 und einen zweiten hiervon unabhängigen Druckluftsteuereingang 68, wobei die zum Betätigen der Ventileinrichtung 18 notwendigen Drücke an dem ersten Druckluftsteuereingang 66 und/oder dem zweiten Druckluftsteuereingang 68 voneinander unabhängig sein können. Die Ventileinrichtung 18 verfügt weiterhin über einen ersten Anschluss 70, einen zweiten Anschluss 72 und einen dritten Anschluss 74.

Figur 7 zeigt ein Schnittbild einer Ausführungsform einer pneumatisch ansteuerbaren Ventileinrichtung in Form eines 3/2-Wegeventils. Das in einer Schnittdarstellung dargestellte 3/2-Wegeventil kann beispielsweise mit den aus den Figuren 1 bis 5 bekannten Ausführungsformen einer Druckluftaufbereitungsanlage verwendet werden. Die vorhandenen Anschlüsse, das heißt der erste Anschluss 70, der zweite Anschluss 72 und der dritte Anschluss 74 sowie der erste Druckluftsteuereingang 66 und der zweite Druckluftsteuereingang 68, können mit den aus Figur 6 bezeichneten Anschlüssen aus der schematischen Darstellung eines 3/2-Wegeventils identifizierbar sein. Die dargestellte Ventileinrichtung 18 verfügt über einen in einer axialen Richtung 84 druckinduziert in einem Gehäuse 76 bewegbaren Schieber 82, der ohne anliegende Steuerdrücke an dem ersten Druckluftsteuereingang 66 und/oder dem zweiten Druckluftsteuereingang 68 von einer Rückstellfeder 78 und/oder einer weiteren Rückstellfeder 80 in der dargestellten Ruhestellung fixiert ist. Bei der dargestellten Ausführungsform ist der zweite Druckluftsteuereingang 68 mit dem zweiten Anschluss 72 baulich zusammengelegt. Die von der weiteren Rückstellfeder 80 auf den Schieber 82 ausgeübte Rückstellkraft kann über eine Stellschraube 88 anpassbar sein. Eine Vielzahl von Dichtungen 86 kann zur gegenseitigen Abdichtung unterschiedlicher Bereiche und Strömungswege in unterschiedlichen Schaltstellungen der Ventileinrichtung 18 vorgesehen sein.

Figur 8 zeigt ein Schnittbild einer weiteren Ausführungsform einer pneumatisch ansteuerbaren Ventileinrichtung in Form eines 3/2-Wegeventils. Das in Figur 8 dargestellte 3/2-Wegeventil entspricht hinsichtlich seiner Funktionalität dem aus Figur 7 bekannten 3/2-Wegeventil. Das dargestellte 3/2-Wegeventil verfügt anstelle des mehrteiligen Schiebers 82 gemäß Figur 7 über einen mehrteiligen Schaltkolben 90, der ebenfalls in der axialen Richtung 84 in dem Gehäuse 76 der Ventileinrichtung 18 bewegbar ist. Der Schaltkolben 90 kann auf einem Ventilsitz 92 aufsitzen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftaufbereitungsanlage
- 12: Kompressorsteuerausgang
- 14: elektronisches Steuergerät
- 16: Magnetventileinrichtung
- 18: Ventileinrichtung
- 20: zentraler Druckluftbereich
- 22: Rückschlagventil
- 24: weitere Magnetventileinrichtung
- 26: weitere Ventileinrichtung
- 28: Regenerationsluftleitung
- 30: Lufttrocknerpatrone
- 32: weitere Regenerationsluftleitung
- 34: Druckluftförderleitung
- 36: Sicherheitsventil
- 38: Regenerationsleitungsrückschlagventil
- 38': weiteres Regenerationsleitungsrückschlagventil
- 40: Drossel
- 42: Drucklufteingang
- 44: weiterer Drucklufteingang
- 46: Entlüftung
- 48: weiteres Rückschlagventil
- 50: erste Sicherheitsventilsteuerleitung
- 52: zweite Sicherheitsventilsteuerleitung
- 54: Kompressorsteuerleitung
- 56: erste Abzweigung
- 58: zweite Abzweigung
- 60: dritte Abzweigung
- 62: Anschluss CAN
- 64: pneumatische Steuerleitung
- 66: erster Druckluftsteuereingang
- 68: zweiter Druckluftsteuereingang
- 70: erster Anschluss
- 72: zweiter Anschluss
- 74: dritter Anschluss
- 76: Gehäuse
- 78: Rückstellfeder
- 80: weitere Rückstellfeder
- 82: Schieber
- 84: axiale Richtung
- 86: Dichtung
- 88: Stellschraube
- 90: Schaltkolben
- 92: Ventilsitz

## Patentansprüche

1. Druckluftaufbereitungsanlage (10) für ein Fahrzeug, insbesondere ein Nutzfahrzeug, umfassend
- einen Kompressorsteuerausgang (12),
- eine von einem elektronischen Steuergerät (14) der Druckluftaufbereitungsanlage (10) ansteuerbare Magnetventileinrichtung (16), und
- eine pneumatisch ansteuerbare Ventileinrichtung (18),
- wobei der Kompressorsteuerausgang (12) über die pneumatisch ansteuerbare Ventileinrichtung (18) mit einem Steuerdruck beaufschlagbar ist, und
- wobei die pneumatisch ansteuerbare Ventileinrichtung (18) über die Magnetventileinrichtung (16) und aus einem zentralen Druckluftbereich (20) ansteuerbar ist.

2. Druckluftaufbereitungsanlage (10) nach Anspruch 1, **dadurch gekennzeichnet, dass** der Kompressorsteuerausgang (12) zusätzlich über die Magnetventileinrichtung (16) beaufschlagbar ist.

3. Druckluftaufbereitungsanlage (10) nach Anspruch 2, **dadurch gekennzeichnet, dass** ein Rückschlagventil (22) zwischen der Magnetventileinrichtung (16) und dem Kompressorsteuerausgang (12) angeordnet ist, so dass ein Rückströmen von Druckluft von dem Kompressorsteuerausgang (12) zu der Magnetventileinrichtung (16) verhindert ist.

4. Druckluftaufbereitungsanlage (10) nach einem der vorhergehenden Ansprüche, **dadurch gekennzeichnet, dass** der Kompressorsteuerausgang (12) über die pneumatisch ansteuerbare Ventileinrichtung (18) entlüftbar ist.

5. Druckluftaufbereitungsanlage (10) nach einem der vorhergehenden Ansprüche, **dadurch gekennzeichnet,**
- **dass** die Druckluftaufbereitungsanlage (10) eine von dem elektronischen Steuergerät (14) ansteuerbare weitere Magnetventileinrichtung (24) und eine pneumatisch ansteuerbare weitere Ventileinrichtung (26) umfasst,
- **dass** die weitere Magnetventileinrichtung (24) in einer Regenerationsluftleitung (28) zur Regeneration einer Lufttrocknerpatrone (30) der Druckluftaufbereitungsanlage (10) angeordnet ist,
- **dass** die pneumatisch ansteuerbare weitere Ventileinrichtung (26) in einer weiteren Regenerationsluftleitung (32) angeordnet ist, und
- **dass** die pneumatisch ansteuerbare weitere Ventileinrichtung (26) pneumatisch von der Magnetventileinrichtung (16) ansteuerbar ist.

6. Druckluftaufbereitungsanlage (10) nach Anspruch 5, **dadurch gekennzeichnet, dass** ein pneumatisch aus einer Druckluftförderleitung (34) ansteuerbares Sicherheitsventil (36) vorgesehen ist, das weiterhin auch aus der Regenerationsluftleitung (28) und/oder der weiteren Regenerationsluftleitung (32) pneumatisch ansteuerbar ist.

7. Druckluftaufbereitungsanlage (10) nach Anspruch 5 oder 6, **dadurch gekennzeichnet,**
- **dass** in der Regenerationsluftleitung (28) ein Regenerationsleitungsrückschlagventil (38) und/oder eine Drossel (40) angeordnet ist,
- wobei das Regenerationsleitungsrückschlagventil (38) derart angeordnet ist, dass Regenerationsluft zu der Lufttrocknerpatrone (30) strömen kann.

8. Verfahren zum Betreiben einer Druckluftaufbereitungsanlage (10) für ein Fahrzeug, insbesondere ein Nutzfahrzeug, umfassend einen Kompressorsteuerausgang (12), eine von einem elektronischen Steuergerät (14) der Druckluftaufbereitungsanlage (10) ansteuerbare Magnetventileinrichtung (16) und eine pneumatisch ansteuerbare Ventileinrichtung (18),
- wobei der Kompressorsteuerausgang (12) über die pneumatisch ansteuerbare Ventileinrichtung (18) mit einem Steuerdruck beaufschlagt wird, und
- wobei die pneumatisch ansteuerbare Ventileinrichtung (18) über die Magnetventileinrichtung (16) und aus einem zentralen Druckluftbereich (20) angesteuert wird.

9. Verfahren nach Anspruch 8, **dadurch gekennzeichnet, dass** der Kompressorsteuerausgang (12) zusätzlich über die Magnetventileinrichtung (16) mit einem Steuerdruck beaufschlagt wird.

## Claims

1. Compressed air processing system (10) for a vehicle, in particular a commercial vehicle, comprising
- a compressor control output (12),
- a solenoid valve device (16) selectable by an electronic control unit (14) of the compressed air processing system (10), and
- a pneumatically selectable valve device (18),
- wherein a control pressure can be applied to the compressor control output (12) via the pneumatically selectable valve device (18), and
- wherein the pneumatically selectable valve device (18) is selectable via the solenoid valve device (16) and from a central compressed air region (20).

2. Compressed air processing system (10) according to claim 1, **characterised in that** a control pressure can additionally be applied to the compressor control output (12) via the solenoid valve device (16).

3. Compressed air processing system (10) according to claim 2, **characterised in that** a non-return valve (22) is located between the solenoid valve device (16) and the compressor control output (12), preventing a return flow of compressed air from the compressor control output (12) to the solenoid valve device (16).

4. Compressed air processing system (10) according to any of the preceding claims, **characterised in that** the compressor control output (12) can be vented via the pneumatically selectable valve device (18).

5. Compressed air processing system (10) according to any of the preceding claims, **characterised in that**
- the compressed air processing system (10) comprises a further solenoid valve device (24) selectable by the electronic control unit (14) and a further pneumatically selectable valve device (26),
- the further solenoid valve device (24) is located in a regeneration air line (28) for regenerating an air drier cartridge (30) of the compressed air processing system (10),
- the further pneumatically selectable valve device (26) is located in an further regeneration air line (32), and
- the further pneumatically selectable valve device (26) is pneumatically selectable by the solenoid valve device (16).

6. Compressed air processing system (10) according to claim 5, **characterised in that** a safety valve (36) is provided, which is pneumatically selectable from a compressed air delivery line (34) and which is further pneumatically selectable from the regeneration air line (28) and/or the further regeneration air line (32).

7. Compressed air processing system (10) according to claim 5 or 6, **characterised in that**
- a regeneration line non-return valve (38) and/or a restrictor (40) is/are located in the regeneration air line (28),
- wherein the regeneration line non-return valve (38) is arranged in such a way that regeneration air can flow to the air drier cartridge (30).

8. Method for operating a compressed air processing system (10) for a vehicle, in particular a commercial vehicle, comprising a compressor control output (12), a solenoid valve device (16) selectable by an electronic control unit (14) of the compressed air processing system (10), and a pneumatically selectable valve device (18),
- wherein a control pressure is applied to the compressor control output (12) via the pneumatically selectable valve device (18), and
- wherein the pneumatically selectable valve device (18) is selected via the solenoid valve device (16) and from a central compressed air region (20).

9. Method according to claim 8, **characterised in that** a control pressure is additionally applied to the compressor control output (12) via the solenoid valve device (16).

## Revendications

1. Installation (10) de préparation d'air comprimé pour un véhicule, notamment pour un véhicule utilitaire, comprenant
- une sortie (12) de commande de compresseur,
- un dispositif (16) d'électrovanne pouvant être commandé par un appareil (14) électronique de commande de l'installation (10) de préparation d'air comprimé et
- un dispositif (18) de vanne pouvant être commandé pneumatiquement,
- dans laquelle la sortie (12) de commande du compresseur peut être alimentée en une pression de commande par le dispositif (18) de vanne pouvant être commandé pneumatiquement et
- dans laquelle le dispositif (18) de vanne pouvant être commandé pneumatiquement peut être commandé par le dispositif (16) d'électrovanne et à partir d'une zone (20) centrale d'air comprimé.

2. Installation (10) de préparation d'air comprimé suivant la revendication 1, **caractérisée en ce que** la sortie (12) de commande du compresseur peut être alimentée supplémentairement par le dispositif (16) d'électrovanne.

3. Installation (10) de préparation d'air comprimé suivant la revendication 2, **caractérisée en ce qu'**un clapet antiretour (22) est monté entre le dispositif (16) d'électrovanne et la sortie (12) de commande du compresseur, de manière à empêcher un retour d'air comprimé de la sortie (12) de commande du compresseur au dispositif (16) d'électrovanne.

4. Installation (10) de préparation d'air comprimé suivant l'une des revendications précédentes, **caractérisée en ce que** la sortie (12) de commande du compresseur peut être purgée par le dispositif (18) de vanne pouvant être commandé pneumatiquement.

5. Installation (10) de préparation d'air comprimé suivant l'une des revendications précédentes, **caractérisée en ce que**
- l'installation (10) de préparation d'air comprimé comprend un autre dispositif (24) d'électrovanne pouvant être commandé par l'appareil (14) électronique de commande et un autre dispositif (26) de vanne pouvant être commandé pneumatiquement,
- l'autre dispositif (24) d'électrovanne est monté dans un conduit (28) d'air de régénération pour la régénération d'une cartouche (30) de dessiccation d'air de l'installation (10) de préparation d'air comprimé,
- l'autre dispositif (26) de vanne pouvant être commandé pneumatiquement est monté dans un autre conduit (32) d'air de régénération et
- l'autre dispositif (26) de vanne pouvant être commandé pneumatiquement peut être commandé pneumatiquement par le dispositif (16) d'électrovanne.

6. Installation (10) de préparation d'air comprimé suivant la revendication 5, **caractérisée en ce qu'**il est prévu une soupape (36) de sécurité, qui peut être commandée pneumatiquement à partir d'un conduit (34) de transport d'air comprimé et qui, en outre, peut être commandée pneumatiquement à partir du conduit (28) d'air de régénération et/ou de l'autre conduit (32) d'air de régénération.

7. Installation (10) de préparation d'air comprimé suivant la revendication 5 ou 6, **caractérisée en ce que**
- un clapet antiretour (38) de conduit de régénération et/ou un étranglement (40) est monté dans le conduit (28) d'air de régénération,
- dans laquelle le clapet antiretour (38) de conduit de régénération est monté de manière à ce que de l'air de régénération puisse aller à la cartouche (30) de dessiccation d'air.

8. Procédé pour faire fonctionner une installation (10) de préparation d'air comprimé pour un véhicule, notamment pour un véhicule utilitaire, comprenant une sortie (12) de commande de compresseur, un dispositif (16) d'électroaimant pouvant être commandé par un appareil (14) électronique de commande de l'installation (10) de préparation d'air comprimé et un dispositif (18) de vanne pouvant être commandé pneumatiquement,
- dans lequel on alimente en une pression de commande la sortie (12) de commande du compresseur par l'intermédiaire du dispositif (18) de vanne pouvant être commandé pneumatiquement et
- dans lequel on commande le dispositif (18) de vanne pouvant être commandé pneumatiquement par le dispositif (16) d'électrovanne et à partir d'une zone (20) centrale d'air comprimé.

9. Procédé suivant la revendication 8, **caractérisé en ce qu'**on alimente en une pression de commande la sortie (12) de commande du compresseur supplémentairement par le dispositif (16) d'électrovanne.
